(19)

Europäisches Patentamt

European Patent Office

Office européen des brevets

(11) **EP 2 887 309 A1**

(12) **EUROPEAN PATENT APPLICATION**

(43) Date of publication:
24.06.2015 Bulletin 2015/26

(51) Int Cl.:
*G06T 5/20* (2006.01)     *G06T 5/50* (2006.01)

(21) Application number: 13306804.9

(22) Date of filing: 20.12.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• **Hoerentrup, Jobst**
  **30974 Wennigsen (DE)**
• **Schlosser, Markus**
  **30177 Hannover (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and apparatus for filtering an image**

(57)     A method and an apparatus (20) for filtering an image are described. A filter (22) computes a filtering output using a guidance image. For calculating (13) the filtering output confidence values associated to a filter input are taken into account. A confidence-weighted averaging is performed using the confidence values.

Fig. 1

**Description**

**FIELD OF THE INVENTION**

The invention relates to a method and an apparatus for filtering an image, and more specifically to a method and an apparatus for filtering an image using a guided image filter.

**BACKGROUND OF THE INVENTION**

Recently a so-called Guided Image Filter has been developed as an edge-preserving smoothing filter. See He et al.: "Guided Image Filtering", Proceedings of the 11th European conference on Computer vision (ECCV'10) (2010), pp. 1-14. Besides the input for the data to be filtered, the Guided Image Filter provides another input for a guidance image that drives the filtering process. It has been proven to be efficient in a wide range of applications, including alpha matting (see He et al.: "A Global Sampling Method for Alpha Matting", Proceedings of the 2011 IEEE Conference on Computer Vision and Pattern Recognition (CVPR '11) (2011), pp. 2049-2056), and others. The Guided Image Filter has several key properties and advantages. A first advantage is the preservation of fine details in the filter input. A further advantage is that the filtered output has a higher quality than comparable filters. For example, it does not suffer from gradient reversal artifacts like the Bilateral Filter (see Tomasi et al.: "Bilateral Filtering for gray and color images", Proceedings of the 1998 IEEE International Conference on Computer Vision (ICCV) (1998), pp. 839-846). Finally, the Guide Image Filter supports an extremely efficient implementation. Its complexity is O(n), where n denotes the number of pixels in the image. Notably, this means that the computational complexity is independent of the chosen size of the filter kernel. No other edge-preserving smoothing filter has this property.

A confidence-aware Bilateral Filter is disclosed in Jachalsky et al.: "Confidence evaluation for robust, fast-converging disparity map refinement", 2010 IEEE International Conference on Multimedia and Expo (ICME) (2010), pp. 1399-1404. Besides potential gradient reversal artifacts, it suffers from computational complexity, especially for larger kernel sizes.

**SUMMARY OF THE INVENTION**

It is thus an object of the present invention to propose an improved solution for filtering an image using a guidance image.

According to the invention, this object is achieved by a method for filtering an image, wherein a filtering output is computed using a guidance image. Confidence values associated to the filter input are taken into account for calculating the filtering output.

Accordingly, an apparatus configured to filter an image comprises a filter configured to compute a filtering output using a guidance image, which is further configured to take confidence values associated to the filter input into account for calculating the filtering output.

Similarly, a computer readable storage medium has stored therein instructions enabling filtering of an image, which when executed by a computer, cause the computer to compute a filtering output using a guidance image, wherein confidence values associated to the filter input are taken into account for calculating the filtering output.

In many applications, a confidence map accompanies the data to be filtered. A confidence value provides a measure of how reliable an element in the input data is deemed to be. The proposed solution extends the standard Guided Image Filter to take advantage of such confidence information. As a result the quality of output of the Guided Image Filter is improved by taking advantage of confidence data associated with the filter input. In particular, this is achieved without sacrificing the O(n) implementation complexity of the Guided Image Filter.

One element of the Guided Image Filter is a linear regression analysis. According to the invention, a weighted linear regression is employed where the confidence values serve as the weights, i.e. a confidence-aware Guided Image Filter is proposed.

As the Guided Image Filter is a smoothing filter that is able to preserve the fine details in the filter input, the Guided Image Filter is applicable in a broad range of applications. The confidence-aware Guided Image Filter is useful for any application where noisy data that is accompanied by confidence values is to be smoothed, e.g. alpha matting, disparity estimation, colorization, optical flow, and more. The proposed extended Guided Image Filter enables significant improvements in the quality of the final filter output with minimal computational overhead and while maintaining its O(n) complexity.

In case of alpha matting, for a training data set provided from www.alphamatting.com, the proposed confidence-aware Guided Image Filter can improve the quality (SAD) of the generated alpha mattes by about 28% on average when compared the standard version of the filter.

Compared to the confidence-aware Joint Bilateral Filter proposed by Jachalsky et al., the confidence-aware Guided Image Filter provides higher output quality.

Because of its low computational complexity and its low memory requirements, the confidence-aware Guided Image Filter is ideally suited for mobile devices.

For a better understanding, the invention shall now be explained in more detail in the following description with reference to the figures. It is understood that the invention is not limited to this exemplary embodiment and that specified features can also expediently be combined and/or modified without departing from the scope of the present invention as defined in the appended claims.

**BRIEF DESCRIPTION OF THE DRAWINGS**

Fig. 1    schematically shows a method according to the invention for filtering an image, and

Fig. 2    illustrates an apparatus adapted to implement a solution according to the invention for filtering an image.

**DETAILED DESCRIPTION OF PREFERED EMBODIMENTS**

In the following two exemplary implementations of the Guided Image Filter shall be described. In one formulation of the Guided Image Filter (the classical filter formulation), the filter output *q* is formulated as a weighted average of its neighboring pixels:

$$q_i = \sum_j W_{ij}(I)p_j \,.$$

Here, $q_i$ is the filter output for pixel *i*, $p_j$ denotes the filter input at pixel *j*, and $W_{ij}(I)$ denotes the weight between pixels *i* and *j*, computed from the Guidance Image *I*. This formulates the output as a classical weighted average image filtering operation. Notably, the output of the Bilateral Filter of Tomasi et al. has the same formulation. Further, Jachalsky et al. disclosed a confidence aware extension of the Bilateral Filter, where the weights $W_{ij}$ are modulated by the confidence values. Therefore, it might seem straight forward to adopt the same approach for the Guided Image Filter as well. Unfortunately, this classical filter formulation of the Guided Image Filter has a super-linear complexity, making such an approach less interesting. Therefore, the present invention focuses on the primary formulation of the Guided Image Filter which provides O(n) computational complexity. It is a goal of the present invention to maintain this linear complexity.

The following provides a brief overview of the primary formulation of the Guided Image Filter that provides an implementation complexity of O(n). More details can be found in He et al.: "Guided Image Filtering", Proceedings of the 11th European conference on Computer vision (ECCV'10) (2010), pp. 1-14. Two cases are distinguished.

Case 1: The guidance image is a grey-scale image

The Guided Image Filter assumes that the filter output *q* is a linear transformation of the guidance image *I* in a window $\omega_k$ centered at pixel *k:*

$$q_i = a_k I_i + b_k, \qquad \forall i \in \omega_k,$$

where $I_i$ denotes the pixel *i* in the Guidance Image, and $a_k$ and $b_k$ are some coefficients assumed to be constant in $\omega_k$. To determine the coefficients, the Guided Image Filter seeks a solution that minimizes the difference between the filter input *p* and its output q. The specific cost function is:

$$E(a_k, b_k) = \sum_{i \in \omega_k} ((a_k I_i + b_k - p_i)^2 + \varepsilon a_k^2),$$

where $\varepsilon$ is a regularization parameter preventing the coefficient $a_k$ from becoming too large. The optimal coefficients can be computed via linear regression:

$$a_k = \frac{\overline{Ip}_k - \bar{I}_k \bar{p}_k}{\sigma_k^2 + \varepsilon}$$

$$b_k = \bar{p}_k - a_k \bar{I}_k.$$

Here, $\overline{Ip}_k = \frac{1}{|\omega|} \sum_{i \in \omega_k} I_i p_i$ denotes the mean product of $I_i$ and $p_i$ in $\omega_k$, $\bar{I}_k$ and $\sigma_k^2$ are the mean and variance of $I$ in $\omega_k$, $|\omega|$ denotes the number of pixels in $\omega_k$ and $\bar{p}_k$ denotes the mean of $p$ in $\omega_k$.

Since $q_i$ is contained in more than one window $\omega_k$, the Guided Image Filter expresses the final filter output as the average output over all windows:

$$q_i = \frac{1}{|\omega|} \sum_{k:i \in \omega_k} (a_k I_i + b_k) = \bar{a}_i I_i + \bar{b}_i,$$

where

$$\bar{a}_i = \frac{1}{|\omega|} \sum_{k:i \in \omega_k} a_k$$

$$\bar{b}_i = \frac{1}{|\omega|} \sum_{k:i \in \omega_k} b_k.$$

Case 2: The guidance image is a 3-channel color image.

As for the grey-scale case, the Guided Image Filter assumes that the filter output $q$ is a linear transformation of $I$ in a window $\omega_k$ centered at pixel k:

$$q_i = \boldsymbol{a}_k^T \boldsymbol{I}_i + b_k, \qquad \forall i \in \omega_k,$$

where $I_i$ now is a 3×1 vector representing the color of pixel $\boldsymbol{i}$ in the Guidance Image, and $a_k$ is a 3×1 coefficient vector for $\omega_k$. Again, $\boldsymbol{a}_k$ and $\boldsymbol{b}_k$ are assumed to be constant in $\omega_k$ and are computed by linear regression as

$$a_k = (\boldsymbol{\Sigma}_k + \varepsilon \boldsymbol{U})^{-1} (\overline{\boldsymbol{Ip}}_k - \bar{\boldsymbol{I}}_k \bar{p}_k)$$

$$b_k = \bar{p}_k - \boldsymbol{a}_k^T \bar{\boldsymbol{I}}_k.$$

$\Sigma_k$ denotes the 3×3 covariance matrix of $\boldsymbol{I}$ in $\omega_k$. Its elements can be computed as

$$\Sigma_k^{(m,n)} = \frac{1}{|\omega|}\sum_{i\in\omega_k} I_i^{(m)} \cdot I_i^{(n)} - \frac{1}{|\omega|}\left(\sum_{i\in\omega_k} I_i^{(m)}\right)\cdot\frac{1}{|\omega|}\left(\sum_{i\in\omega_k} I_i^{(n)}\right),$$

where $|\omega|$ denotes the number of pixels in $\omega_k$, and $I_i^{(x)}$ denotes the value of color channel x of $\boldsymbol{I}$ at pixel $\boldsymbol{i}$.

As for the grey-scale case, since $\boldsymbol{q}_i$ is contained in more than one window $\omega_k$, the Guided Image Filter expresses the final filter output as the averaged output over all windows that contain pixel $\boldsymbol{i}$:

$$q_i = \frac{1}{|\omega|}\sum_{k:i\in\omega_k}(\boldsymbol{a}_k^T\boldsymbol{I}_i + b_k) = \bar{\boldsymbol{a}}_i^T\boldsymbol{I}_i + \bar{b}_i,$$

where

$$\bar{\boldsymbol{a}}_i = \frac{1}{|\omega|}\sum_{k:i\in\omega_k}\boldsymbol{a}_k$$

$$\bar{b}_i = \frac{1}{|\omega|}\sum_{k:i\in\omega_k}b_k.$$

In the following a modified confidence-weighted linear regression will be described.
As can be seen above, the standard linear regressions in the Guided Image Filter do not take into account how reliable some input $\boldsymbol{p}_i$ is deemed to be. The regression line is computed under the assumption that all $\boldsymbol{p}_i$ are equally reliable. Any residuals are equally weighted. The proposed invention overcomes this restriction by computing a regression line that weights the residuals according to the confidence associated to $\boldsymbol{p}_i$. For many applications, such confidence data is generated in a preceding processing stage together with the data to be filtered, and is thus readily available. In the case of a grey-scale image the coefficients are computed by minimizing the following energy:

$$E(a_k, b_k) = \sum_{i\in\omega_k}(c_i(a_k I_i + b_k - p_i)^2 + \varepsilon a_k^2),$$

where $\boldsymbol{c}_i$ denotes the confidence associated to the filter input $\boldsymbol{p}_i$. The computation of the weighted linear regression coefficients is known in the art. In general, any averaging operation is replaced by a weighted averaging operation. Since the present invention uses the confidence values as the weights, a weighted average value is computed as follows:

$$\bar{\tilde{X}}_k = \frac{\sum_i X_i c_i}{\sum_i c_i},$$

where **X** refers to the quantity to be averaged.

The following describes the consequences for both the grey-scale case and the color case.

According to one aspect of the invention, the modified coefficients $\tilde{a}_k$ and $\tilde{b}_k$ for the grey-scale case are computed as

$$\tilde{a}_k = \frac{\bar{\tilde{Ip}}_k - \bar{\tilde{I}}_k \bar{\tilde{p}}_k}{\tilde{\sigma}_k^2 + \varepsilon}$$

$$\tilde{b}_k = \bar{\tilde{p}}_k - \tilde{a}_k \bar{\tilde{I}}_k,$$

with

$$\bar{\tilde{Ip}}_k = \frac{\sum_i I_i p_i c_i}{\sum_i c_i}$$

$$\bar{\tilde{I}}_k = \frac{\sum_i I_i c_i}{\sum_i c_i}$$

$$\bar{\tilde{p}}_k = \frac{\sum_i p_i c_i}{\sum_i c_i}$$

$$\tilde{\sigma}_k^2 = \frac{\sum_i c_i (I_i - \bar{\tilde{I}}_k)^2}{\sum_i c_i}.$$

Similarly, the modified coefficients $\tilde{a}_k$ and $\tilde{b}_k$ for the color case are computed as

$$\tilde{a}_k = (\bar{\tilde{\Sigma}}_k + \varepsilon \mathbf{U})^{-1} (\bar{\tilde{Ip}}_k - \bar{\tilde{I}}_k \bar{\tilde{p}}_k)$$

$$\tilde{b}_k = \bar{\tilde{p}}_k - \tilde{a}_k^T \bar{\tilde{I}}_k,$$

with

$$\widetilde{\overline{Ip}}_k = \frac{\sum_i I_i p_i c_i}{\sum_i c_i}$$

$$\widetilde{\overline{I}}_k = \frac{\sum_i I_i c_i}{\sum_i c_i}$$

$$\widetilde{\overline{p}}_k = \frac{\sum_i p_i c_i}{\sum_i c_i}.$$

Here $\widetilde{\Sigma}_k$ denotes the confidence-weighted covariance matrix of $I$ in $\omega_k$. Its elements can be computed by

$$\widetilde{\Sigma}_k^{(m,n)} = \frac{\sum_i I_i^{(m)} \cdot I_i^{(n)} c_i}{\sum_i c_i} - \frac{\sum_i I_i^{(m)} c_i}{\sum_i c_i} \cdot \frac{\sum_i I_i^{(n)} c_i}{\sum_i c_i}.$$

Since the pixel $q_i$ is contained in more than one window $\omega_k$, according to the standard Guided Image Filter, the coefficients of the individual windows are averaged to compute the final output $q_i$. According to another aspect of the invention, the output $q_i$ is computed by confidence-weighted averaging.

In one embodiment of the invention, the contribution of a window is weighted according to its window confidence, e.g. the sum (or equivalently the average) of the confidence values within the window. In this case, the coefficients are computed by

$$\overline{\overline{a}}_i = \frac{\sum_{k:i\in\omega_k} \tilde{a}_k c_k}{\sum_{k:i\in\omega_k} c_k}$$

$$\overline{\overline{b}}_i = \frac{\sum_{k:i\in\omega_k} \tilde{b}_k c_k}{\sum_{k:i\in\omega_k} c_k},$$

with

$$c_k = \sum_{i\in\omega_k} c_i.$$

In another embodiment of the invention, the contribution of a window is weighted according to the confidence of its center pixel. In this case, the coefficients are computed by

$$\bar{\tilde{a}}_i = \frac{\sum_{k:i\in\omega_k} \tilde{a}_k c_k}{\sum_{k:i\in\omega_k} c_k}$$

$$\bar{\tilde{b}}_i = \frac{\sum_{k:i\in\omega_k} \tilde{b}_k c_k}{\sum_{k:i\in\omega_k} c_k}.$$

Here, $c_k$ denotes the confidence value associated to the center pixel in the window $\omega_i$.

The last five equations above hold for the grey-scale case and the color case. In the grey-scale case, $a_k$, $b_k$, $\bar{\tilde{a}}_i$ and $\bar{\tilde{b}}_i$ are scalar values, whereas for the color case, they are 3×1 vectors.

For the grey-scale case, the final filter output is computed as

$$q_i = \bar{\tilde{a}}_i I_i + \bar{\tilde{b}}_i,$$

whereas for the color case, the final filter output is computed as

$$q_i = \bar{\tilde{\boldsymbol{a}}}_i^T \boldsymbol{I}_i + \bar{b}_i.$$

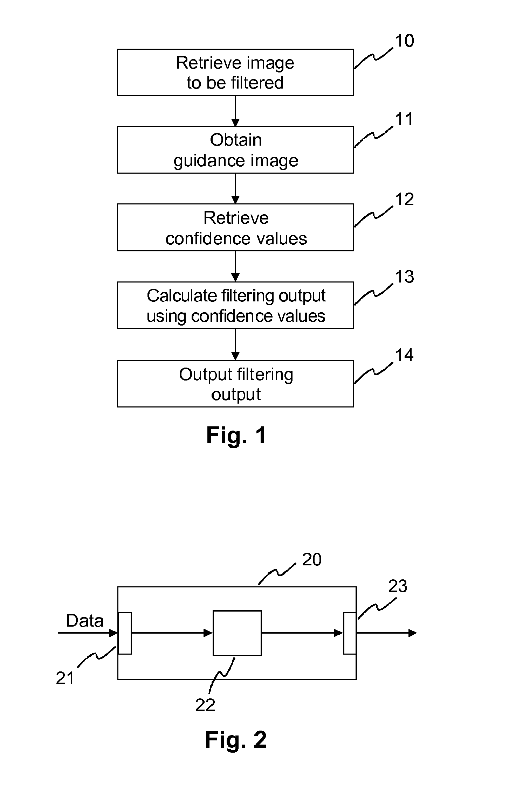

A method according to one embodiment of the invention for filtering an image using a guidance image is schematically shown in Fig. 1. In a first step the image to be filtered is retrieved 10. Then the guidance image is obtained 11, which may be the image to be filtered or a different image. Then confidence values associated to the filter input are retrieved 12. The confidence values are taken into account for calculating 13 the filtering output. Finally, the calculated filtering output is made available 14.

Fig. 2 schematically illustrates one embodiment of an apparatus 20 adapted to implement a solution according to the invention for filtering an image using a guidance image. The apparatus has an input 21 with one or more input units for retrieving 10 the image to be filtered, obtaining 11 the guidance image, and retrieving 12 confidence values associated to the filter input, e.g. from an attached storage or from a network. It is likewise possible that the confidence values are calculated by the apparatus based on other input data, or that more than one input is used for retrieving the various input data. Also, the data may be obtained from an internal storage of the apparatus 20. A filter 22 calculates 13 the filtering output, taking into account the confidence values. The resulting filtering output is made available 14 at an output 23. The filter 22 may likewise be implemented as software running on a processor. Also, the input 21 and the output 23 may be combined into a single bidirectional interface.

## Claims

1. A method for filtering an image, wherein a filtering output is computed using a guidance image, **characterized in that** confidence values associated to a filter input are taken into account for calculating (13) the filtering output.

2. The method according to claim 1, **wherein** computing the filtering output comprises a linear transformation of the guidance image in a window.

3. The method according to claim 2, **wherein** the transformation is a linear transformation.

4. The method according to claim 2 or 3, **wherein** computing the filtering output comprises computing a regression line that weights residuals according to the confidence values associated to the filter input values.

5. The method according to one of claims 2 to 4, **wherein** the filtering output is calculated using a confidence-weighted averaging of coefficients of individual windows.

6. The method according to one of claims 2 to 5, **wherein** a contribution of a window is weighted according to its window confidence.

7. The method according to claim 6, **wherein** the window confidence is the sum or the mean value of the confidence values within the window

8. The method according to one of claims 2 to 4, **wherein** a contribution of a window is weighted according to a confidence of the center pixel of the window.

9. An apparatus (20) configured to filter an image, the apparatus comprising a filter (22) configured to compute a filtering output using a guidance image, **characterized in that** the filter (22) is configured to take confidence values associated to the guidance image into account for calculating (13) the filtering output.

10. A computer readable storage medium having stored therein instructions enabling filtering of an image, which when executed by a computer, cause the computer to compute a filtering output using a guidance image, **characterized in that** confidence values associated to a filter input are taken into account for calculating (13) the filtering output.

**Fig. 1**

**Fig. 2**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2013/124312 A1 (TP VISION HOLDING BV [NL]) 29 August 2013 (2013-08-29)<br>* page 3, lines 5-15; figure 2 *<br>* page 7, lines 21-25 *<br>* page 15, lines 14-32 *<br>----- | 1-4,9,10<br><br>5-8 | INV.<br>G06T5/20<br>G06T5/50 |
| X,D<br><br><br><br><br><br><br><br>Y | JACHALSKY J ET AL: "Confidence evaluation for robust, fast-converging disparity map refinement",<br>MULTIMEDIA AND EXPO (ICME), 2010 IEEE INTERNATIONAL CONFERENCE ON, IEEE, PISCATAWAY, NJ, USA,<br>19 July 2010 (2010-07-19), pages 1399-1404, XP031761528,<br>ISBN: 978-1-4244-7491-2<br>* abstract; figure 1 *<br>* page 1400, paragraph 1 *<br>* Section 4.;<br>page 1402 *<br>----- | 1,9,10<br><br><br><br><br><br><br><br>1-10 | |
| Y,D | KAIMING HE ET AL: "Guided Image Filtering",<br>5 September 2010 (2010-09-05), COMPUTER VISION Â ECCV 2010, SPRINGER BERLIN HEIDELBERG, BERLIN, HEIDELBERG, PAGE(S) 1 - 14, XP019150502,<br>ISBN: 978-3-642-15548-2<br>* abstract; figures 1,4 *<br>* section 3.;<br>pages 3-5 *<br>-----<br><br>-/-- | 1-10 | TECHNICAL FIELDS SEARCHED (IPC)<br><br>G06T |

The present search report has been drawn up for all claims

| Place of search | Date of completion of the search | Examiner |
|---|---|---|
| Munich | 26 June 2014 | Meinl, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 13 30 6804

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SYLVAIN PARIS ET AL: "A Fast Approximation of the Bilateral Filter Using a Signal Processing Approach", INTERNATIONAL JOURNAL OF COMPUTER VISION, KLUWER ACADEMIC PUBLISHERS, BO, vol. 81, no. 1, 18 December 2007 (2007-12-18), pages 24-52, XP019650170, ISSN: 1573-1405 * abstract * ----- | 1-10 | |

TECHNICAL FIELDS
SEARCHED      (IPC)

The present search report has been drawn up for all claims

| Place of search | Date of completion of the search | Examiner |
|---|---|---|
| Munich | 26 June 2014 | Meinl, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 13 30 6804

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2014

| Patent document cited in search report | Publication date | Patent family member(s) | Publication date |
|---|---|---|---|
| WO 2013124312    A1 | 29-08-2013 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HE et al.** Guided Image Filtering. *Proceedings of the 11th European conference on Computer vision (ECCV'10,* 2010, 1-14
- **HE et al.** A Global Sampling Method for Alpha Matting. *Proceedings of the 2011 IEEE Conference on Computer Vision and Pattern Recognition (CVPR '11,* 2011, 2049-2056
- **TOMASI et al.** Bilateral Filtering for gray and color images. *Proceedings of the 1998 IEEE International Conference on Computer Vision (ICCV,* 1998, 839-846
- **JACHALSKY et al.** Confidence evaluation for robust, fast-converging disparity map refinement. *IEEE International Conference on Multimedia and Expo (ICME,* 2010, 1399-1404